# EUROPÄISCHE PATENTSCHRIFT

(11) **EP 2 662 773 B1**
(45) Veröffentlichungstag und Bekanntmachung des Hinweises auf die Patenterteilung: **20.07.2016**
(21) Anmeldenummer: 12167468.3
(22) Anmeldetag: 10.05.2012
(51) Int. Cl.: G06F 11/16, G06F 11/18

(54) **Redundantes Mehrprozessorsystem und zugehöriges Verfahren**
Redundant multi-processor system and corresponding method
Système à processeurs multiples redondant et procédé correspondant

(43) Veröffentlichungstag der Anmeldung: 13.11.2013
(73) Patentinhaber: Airbus Defence and Space GmbH, 85521 Ottobrunn (DE)
(72) Erfinder: Paulitsch, Michael, Dr. Dr., 85521 Ottobrunn (DE); Nowotsch, Jan, 82008 Unterhaching (DE); Girbinger, Ludwig, 80538 München (DE); Buehler, Daniel, 78464 Konstanz (DE); Herkersdorf, Andreas, Prof. Dr., 82266 Inning am Ammersee (DE); Wild, Thomas, Dr., 81373 München (DE)
(74) Vertreter: Kopf Westenberger Wachenhausen Patentanwälte PartG mbB

(56) Entgegenhaltungen:
- EP-A1- 1 517 199
- EP-A1- 1 857 936
- WO-A1-2006/010374
- DE-A1-102007 033 885

## Beschreibung

Die Erfindung betrifft ein Verfahren, ein Computerprogramm und ein computerlesbares Medium zum Vermindern von Fehlern in bei der Ausführung eines Anwendungsmoduls, sowie ein System zum Ausführen des Verfahrens.

### HINTERGRUND DER ERFINDUNG

In vielen technischen Bereichen, wie etwa der Avionik, der Fahrzeugtechnik oder der Anlagentechnik gibt es hochkritische Systeme, bei denen die beteiligten elektrischen und elektronischen Geräte unter nahezu keinen Umstände versagen oder fehlerhaft arbeiten dürfen.

Elektronische Prozessoren können Konstruktionsdefizite aufweisen, die verhindern, sie in derartigen hochkritischen Anwendungen einzusetzen. Beispielsweise gab es bei einem Intel-Pentium-Prozessor den sogenannten "multiply bug", d. h. Multiplizierfehler, bei dem zwei Gleitkommazahlen aufgrund eines Konstruktionsfehlers nicht korrekt multipliziert wurden. Im Allgemeinen können bei elektronische Prozessoren auch andere Fehler auftreten, die während des Betriebs zu einem Ausfall oder falschen Daten führen, wie etwa "bit flips".

Es ist bekannt, mehrere, beispielsweise unterschiedliche Prozessoren parallel mit dem gleichen Programm zu betreiben und deren Ausgaben zu verwenden, um sich gegenseitig zu überwachen. Dabei wird angenommen, dass zu einem bestimmten Zeitpunkt bei zwei verschiedenen Prozessoren wenigstens einer korrekt arbeitet. Beispielsweise können die von in einem Prozessor ablaufenden Programm erzeugten Daten von diesem Programm an ein analoges Programm gesendet werden, das in einem weiteren Prozessor abläuft und das zusätzlich die von ihm erzeugten Daten mit den gesendeten Daten vergleicht.

Die EP 1 857 936 A1 betrifft ein System zum redundanten Verarbeiten von Daten aus Feldgeräten, bei dem zwei Geräte die Daten parallel verarbeiten. Die vom ersten Gerät erzeugten Daten werden an das zweite Gerät gesandt und dort vereinigt. Wenn die Daten nicht zusammenpassen, wird die Verarbeitung der Daten im ersten Gerät gestoppt.

Die WO 2006/010374 A1 zeigt ein Gerät zum Sichern von konsistenten Speicherinhalten mit redundanten Komponenten, bei dem zum Sichern von konsistenten Speicherinhalten bei einem Schreibzugriff auf einen Speicherbereich mit einer MMU eine Kopie des Speicherbereichs erzeugt wird.

### ZUSAMMENFASSUNG DER ERFINDUNG

Es kann notwendig sein, bereits bestehende Programme zu modifizieren, um diese in einem hochkritischen System ablaufen lassen zu können. In anderen Fällen kann es wünschenswert sein, Programme nur nach funktionellen Anforderungen zu programmieren und nicht-funktionelle Anforderungen separat umzusetzen. Außerdem kann das Kopieren und Versenden der von den Programmen erzeugten Daten weitere Last auf den beteiligten Prozessoren erzeugen.

Es ist Aufgabe der Erfindung, ein schnelles und leicht anpassbares hochkritisches System und ein entsprechendes Betriebsverfahren bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zum Vermindern von Fehlern bei der Ausführung eines Anwendungsmoduls, insbesondere von Fehlern, die durch konstruktionsbedingte Mängel eines Prozessors entstehen, auf dem das Anwendungsmodul ausgeführt wird.

Gemäß einer Ausführungsform der Erfindung umfasst das Verfahren die Schritte von: Ausführen eines Anwendungsmoduls in einem ersten Prozessorkern einer ersten Rechnerplattform, wobei das Anwendungsmodul erste vordefinierte Daten (in der ersten Rechnerplattform) ändert und Ausführen des Anwendungsmoduls in einem zweiten Prozessorkern einer zweiten Rechnerplattform, wobei das Anwendungsmodul zweite vordefinierte Daten (in der zweiten Rechnerplattform) ändert.

Unter einer Rechnerplattform kann dabei ein vollständiger PC, eine Steuerung oder eine Platine mit den entsprechenden Komponenten verstanden werden.

Das Anwendungsmodul kann beispielsweise in einer höheren Programmiersprache (beispielsweise C, C++) programmiert und dann für die entsprechende Rechnerplattform kompiliert worden sein.

Die beiden Prozessoren können unterschiedlich ausgeführte bzw. konstruierte Prozessoren sein. So kann es möglich werden, dass der erste Prozessor das Anwendungsmodul aufgrund eines Konstruktionsmangels fehlerhaft ausführt, der zweite Prozessor aber nicht.

Ein Anwendungsmodul und allgemein ein Programmmodul (wie die weiter unten genannten Abstimmmodule und Kopiermodule) können ein Computerprogramm, eine Anwendung oder zumindest ein Teil einer Programmbibliothek sein, der in der jeweiligen Rechnerplattform gespeichert bzw. in diese geladen werden und dann ausgeführt werden kann. Ein Anwendungsmodul kann als (nebenläufiger) Prozess in der Rechnerplattform ausgeführt werden.

Die vordefinierten Daten können bestimmte vom Anwendungsmodul beeinflusste Daten sein, wie etwa Daten in einem Hauptspeicher oder Daten in Registern des Prozessorkerns. Eine Vordefinition der Daten kann dadurch erfolgen, dass die Überwachungseinheit angewiesen wird, nicht alle beeinflussten Daten sondern lediglich eine bestimmte Auswahl aus diesen Daten zu überwachen.

Gemäß einer Ausführungsform der Erfindung umfasst das Verfahren die Schritte von: Überwachen des Anwendungsmoduls durch eine vom ersten Prozessorkern unabhängige Überwachungseinheit, wobei die Überwachungseinheit überwacht, ob das Anwendungsmodul die ersten vordefinierten Daten verändert hat; und Kopieren der ersten vordefinierten Daten in die zweite Rechnerplattform durch die Überwachungseinheit. Mit anderen Worten muss nicht mehr das Anwendungsmodul seine vordefinierten Daten selbstständig zum Kopieren vorbereiten, sondern kann dies durch eine automatische Überwachungseinheit erledigen lassen. Der Kopiervorgang kann insbesondere transparent sein, so dass das Anwendungsmodul vollständig unabhängig vom Kopiervorgang ausgeführt werden kann. Damit muss ein Anwendungsmodul nicht modifiziert werden, wenn es in dem System eingesetzt werden soll.

Weiter ist die Überwachungseinheit vom Prozessorkern unabhängig. Auf diese Weise kann die Überwachungseinheit die Daten überwachen und kopieren, ohne dass der Prozessorkern dazu Instruktionen ausführen muss und/oder durch den Kopiervorgang blockiert ist. In der Zeit, in der die Daten kopiert werden, kann der Prozessorkern weitere, unterschiedliche Anwendungsmodule ausführen.

Gemäß einer Ausführungsform der Erfindung umfasst das Verfahren den Schritt von Verarbeiten der ersten vordefinierten Daten und der zweiten vordefinierten Daten zu abgestimmten Daten, so dass Fehler in den ersten vordefinierten Daten oder zweiten vordefinierten Daten, die durch Ausführen des Anwendungsmoduls in dem ersten Prozessorkern oder dem zweiten Prozessorkern erzeugt wurden, vermindert werden. Beispielsweise können die wenigstens zwei Sätze von vordefinierten Daten in der zweiten Rechnerplattform oder in einer den Rechnerplattformen nachgeschalteten Steuerung miteinander verglichen werden. Unterscheiden sich die vordefinierten Daten verschiedener Rechnerplattformen signifikant, deutet dies auf einen Fehler hin. In diesem Fall kann beispielsweise die Weiterverarbeitung der vordefinierten Daten, bei denen es sich beispielsweise um Steuerbefehle eines Aktuators handeln kann, unterbrochen werden.

Beispielsweise erfolgt das Verarbeiten der ersten vordefinierten Daten und der zweiten vordefinierten Daten mit einem Abstimmmodul, das von der zweiten Rechnerplattform ausgeführt wird.

Insgesamt ist keine Modifikation von Anwendungssoftware bzw. des Anwendungsmoduls notwendig, da der Vergleich der Daten für die Anwendungsmodule komplett transparent sein kann. Weiter ist auch keine Synchronisation zwischen Prozessoren notwendig, so dass der Vergleich der Daten unabhängig vom Ausführen der Anwendungsmodule auf anderen Rechnerplattformen erfolgen kann.

Ein weiterer Aspekt der Erfindung betrifft ein System zum Vermindern von Fehlern bei der Ausführung eines Anwendungsmoduls. Ein derartiges System kann beispielsweise in der Avionik, d. h. in einem Luftfahrzeug, einem Bodenfahrzeug oder einer technischen Anlage eingesetzt werden, insbesondere überall da, wo hochkritische System eingesetzt werden.

Gemäß einer Ausführungsform der Erfindung umfasst das System wenigstens eine erste und eine zweite Rechnerplattform, wobei die erste Rechnerplattform einen ersten Prozessorkern, eine erste Überwachungseinheit und eine erste Kommunikationseinheit umfasst, und wobei die zweite Rechnerplattform einen zweiten Prozessorkern, eine zweite Überwachungseinheit und eine zweite Kommunikationseinheit umfasst. Die Rechnerplattformen des Systems können identisch aufgebaut sein. Auch ist es möglich, dass auf den Rechnerplattformen die gleiche Software installiert ist.

Gemäß einer Ausführungsform der Erfindung ist das System dazu ausgeführt, das Verfahren so wie es obenstehend und untenstehend beschrieben ist, durchzuführen. Umgekehrt können auch Merkmale des Systems Merkmale des Verfahrens sein. Aus Gründen der Redundanz kann damit jeder Prozessorkern bzw. jede Rechnerplattform die gleiche Anwendung, d. h. das gleiche Anwendungsmodul ausführen. Dazu kann jedes Anwendungsmodul in jeder Rechnerplattform die gleichen Eingabedaten erhalten. Im Grunde erzeugt dann das Anwendungsmodul aus den Eingabedaten durch eine Berechnung mit dem jeweiligen Prozessorkern die vordefinierten Daten, die abschließend zusammen zur Fehlersuche verarbeitet werden.

Da die gleiche Version des Anwendungsmoduls in mehreren Prozessorkernen ausgeführt wird, handelt es sich bei dem System um ein redundantes System, das darüber hinaus in der Lage ist zu beurteilen bzw. mit einer gewissen Wahrscheinlichkeit anzugeben, welche vordefinierten Daten korrekt sind und welche nicht. Dadurch können nicht-kritische programmierte Anwendungsmodule durch den Einsatz in dem System auch in hochkritischen Anwendungen eingesetzt werden.

Auch muss ein bekanntes Anwendungsmodul zum Einsatz in einem hochkritischen System nicht modifiziert werden. Es kann nur notwendig sein, anzugeben, welche Speicherbereiche bzw. welche Hardware-Informationen, der von dem Anwendungsmodul erzeugten vordefinierten Daten kritisch sind und überwacht (d. h. kopiert, versendet und/oder verglichen) werden sollen.

Da der Datenaustausch im Hintergrund stattfinden kann, kann sich die Determiniertheit des Systems erhöhen. Beispielsweise werden die Prozessorkerne nicht auf unbestimmte Zeit durch die Kopier- und Sendevorgänge angehalten und/oder müssen darauf warten, dass eine Bestätigung dieser Vorgänge im Prozessorkern eintrifft.

Weiter kann mit dem System Rechenzeit eingespart und anderweitig verwendet werden, da die Prozessorkerne nicht mehr für den Datenaustausch verantwortlich sind und dann beispielsweise andere Prozesse parallel ausführen können.

Außerdem können die Anwendungsmodule auf den verschiedenen Rechnerplattformen asynchron ausgeführt werden. Es kann lediglich notwendig sein, dass die vordefinierten Daten zu einem späteren Zeitpunkt gleichzeitig weiterverarbeitet werden.

Damit können SoC-(System auf einem Chip)-Einheiten (wie etwa Debug-Einheiten) dazu verwendet werden, kritische Speicherbereiche automatisch zu überwachen und/oder automatisch an verschiedene Prozessorkerne zu versenden. Zusätzlich kann das Versenden von Speicherbereichen automatisch durch Hardware-Komponenten und insbesondere zusätzliche Komponenten auf dem Chip der CPU erfolgen.

Auf diese Weise kann das redundantes System unter Verwendung von Mehrkernprozessoren (multi-core processors) oder zumindest eines Einchipsystems (system-on-a-chip) umgesetzt werden.

Viele CPUs umfassen eine eigentlich zu Debug-Zwecken integrierte Debug-Einheit, die dazu ausgeführt ist, Speicherbereiche bzw. Register auf Zugriff des Prozessorkerns zu überwachen und diese Speicherbereiche innerhalb des Hauptspeichers zu kopieren bzw. an weitere Prozessorplattformen zu versenden.

Gemäß einer Ausführungsform der Erfindung speichert das Anwendungsmodul bei dessen Ausführung erste vordefinierte Daten in einen Ausgabe-Speicherbereich der ersten Rechnerplattform, wobei die Überwachungseinheit den Ausgabe-Speicherbereich überwacht. Mit anderen Worten können die vordefinierten Daten Informationen sein, die durch das Anwendungsmodul im Hauptspeicher abgelegt werden. Die Überwachungseinheit kann dazu angewiesen sein, bestimmte vordefinierte Speicherbereiche, in denen sich diese Daten befinden, zu überwachen.

Gemäß einer Ausführungsform der Erfindung überwacht die Überwachungseinheit Hardware-Informationen, die vom ersten Anwendungsmodul beeinflusst werden, als erste vordefinierte Daten. Beispielsweise kann die Überwachungseinheit bestimmte Daten in der Rechnerplattform erfassen, beispielsweise bestimmte Informationen über die Hardware selbst (wie etwa Hardware oder Prozessorkern-Auslastung, Temperatur, Single- und Multi-Bit Error Counter, Medium Access Error Counter.usw) oder den auf ihr ablaufenden Kontrollfluss der Software (erlaubte bzw. untersagte Verzweigungsoptionen). Auch diese Daten können zu den weiteren Plattformen kopiert bzw. versendet werden und in Abstimmmodulen als zusätzliche Informationen zur Feststellung der Korrektheit bzw. vorausschauenden Vertrauenswürdigkeit der Resultate verwendet werden.

Gemäß einer Ausführungsform der Erfindung umfasst das Verfahren weiter den Schritt von Auslösen des Kopierens durch die Überwachungseinheit durch ein Prozessorereignis. Beispielsweise ist das Prozessorereignis der Zugriff des ersten Prozessorkerns auf den Ausgabe-Speicherbereich. Der Kopiervorgang bzw. der Datentransfer kann aufgrund von Prozessor-Ereignissen angestoßen werden. Ein derartiges Prozessor-Ereignis kann der Zugriff auf eine bestimmte Adresse oder einen bestimmten Adressbereich im Speicher sein. Damit kann ein Zugriff auf einen Speicherbereich, in dem die vordefinierten Daten gespeichert sind, transparent erfasst werden und den Datenaustausch mit anderen Rechnerplattformen auslösen.

Gemäß einer Ausführungsform der Erfindung umfasst das Verfahren den Schritt von Kopieren der ersten vordefinierten Daten in einen Sende-Speicherbereich der ersten Rechnerplattform durch die Überwachungseinheit. Beispielsweise können AusgabeDaten des Anwendungsmoduls, die in einen Ausgabe-Speicherbereich des Hauptspeichers geschrieben werden, durch die Überwachungseinheit in den Sende-Speicherbereich kopiert werden.

Gemäß einer Ausführungsform der Erfindung sind der Ausgabe-Speicherbereich und der Sende-Speicherbereich Bereiche eines Hauptspeichers der ersten Rechnerplattform.

Der Ausgabe-Speicherbereich und der Sende-Speicherbereich können Adressbereiche des Hauptspeichers sein und durch Speicheradressen definiert werden.

Gemäß einer Ausführungsform der Erfindung umfasst das Verfahren weiter den Schritt von Versenden der ersten vordefinierten Daten im Sende-Speicherbereich mit einer ersten Kommunikationseinheit der ersten Rechnerplattform zu einer zweiten Kommunikationseinheit der zweiten Rechnerplattform, wobei die erste Kommunikationseinheit unabhängig vom ersten Prozessorkern den Sende-Speicherbereich ausliest und die darin gespeicherten ersten vordefinierten Daten an die zweite Kommunikationseinheit versendet. Das Kopieren der vordefinierten Daten zwischen den Rechnerplattformen kann also ein Kopieren der vordefinierten Daten im Hauptspeicher und/oder einer Versenden der vordefinierten Daten zwischen Kommunikationseinheiten umfassen.

Beispielsweise kann die zweite Kommunikationseinheit Bestandteil der zweiten Rechnerplattform sein. Die zweite Kommunikationseinheit kann die empfangenen vordefinierten Daten unabhängig vom zweiten Prozessorkern in einen Speicherbereich der zweiten Rechnerplattform schreiben. Beispielsweise können die vordefinierten Daten mittels eines Datenlinks zu anderen Rechnerplattformen versendet bzw. kopiert werden. Auch das Versenden der Daten kann automatisch, unabhängig vom Prozessorkern der Rechnerplattform und/oder transparent erfolgen. Damit kann die Datenkommunikation insgesamt schneller ausgestaltet werden, da der Sendevorgang unabhängig vom Prozessor erfolgen können.

Es ist zu verstehen, dass die in einer Rechnerplattform installierte Funktionalität, die sich um das Kopieren der vordefinierten Daten, das Versenden dieser Daten und/oder den Empfang der vordefinierten Daten von einer anderen Rechnerplattform kümmert, als Kopiermodul bzw. Datentransportmodul aufgefasst werden kann. Das Kopiermodul (das auch als Überwachungsmodul aufgefasst werden kann, wenn es selbstständig die vordefinierten Daten überwacht). Dieses Kopiermodul kann unabhängig von dem Anwendungsmodul installiert werden. Insbesondere kann der Datenaustausch zwischen den Rechnerplattformen vollständig transparent sein, d. h. die Anwendungsmodule sind unabhängig von den Kopiermodulen und deren Implementierung.

Gemäß einer Ausführungsform der Erfindung umfasst das Verfahren weiter den Schritt von: Verarbeiten der ersten vordefinierten Daten und der zweiten vordefinierten Daten in einem Abstimmmodul in der zweiten Rechnerplattform zu zweiten abgestimmten Daten. Um Fehler zu erfassen, kann das Abstimmmodul dazu ausgeführt sein, die vordefinierten Daten der Anwendungsmodule zu überprüfen und zusätzlich dazu ausgeführt sein, einer nachgeschalteten Steuerung (beispielsweise eines Zielaktuators) gültige bzw. zumindest vorverarbeitete oder abgestimmte Daten zu präsentieren. Mit einem gesondert vom Anwendungsmodul installierten Abstimmmodul kann eine Fehlerdetektion für Fehler in den vordefinierten Daten des Anwendungsmoduls umgesetzt werden.

Gemäß einer Ausführungsform der Erfindung umfasst das Verfahren weiter die Schritte von: Senden der von dem Anwendungsmodul in der zweiten Rechnerplattform erzeugten zweiten vordefinierten Daten an die erste Rechnerplattform; und Verarbeiten der ersten vordefinierten Daten und der zweiten vordefinierten Daten in dem Abstimmmodul in der ersten Rechnerplattform zu ersten abgestimmten Daten. Mit anderen Worten kann das System symmetrisch aufgebaut sein. Jede der Rechnerplattformen kann die vordefinierten Daten an alle anderen Rechnerplattformen versenden und/oder die vordefinierten Daten aller Rechnerplattformen verarbeiten.

Nach dem Anwendungsmodul kann das Abstimmmodul der jeweiligen Rechnerplattform gestartet werden, wenn die vordefinierten Daten der Anwendungsmodule der anderen Rechnerplattformen vorliegen. Jedoch kann dies auch unabhängig davon erfolgen, beispielsweise wenn ein Scheduler das Abstimmmodul startet.

Das Abstimmmodul kann die vordefinierten Daten aller Rechnerplattformen vergleichen und abgestimmte bzw. korrigierte vordefinierte Daten an ein nachgelagertes System bzw. eine nachgeladene Steuerung, wie etwa die eines Aktuators, bereitstellen.

Gemäß einer Ausführungsform der Erfindung erzeugt die erste Rechnerplattform erste abgestimmte Daten und die zweite Rechnerplattform zweite abgestimmte Daten. Das Verfahren umfasst weiter die Schritte von: Versenden der ersten abgestimmten Daten und der zweiten abgestimmten Daten zu einer nachgeschalteten Steuerung; Verarbeiten der ersten und zweiten abgestimmten Daten zu finalen Daten durch ein nachgeschaltetes Abstimmmodul in der nachgeschalteten Steuerung. Es ist auch möglich, mehrere Ebenen von Abstimmmodulen zu verwenden, um ein Endergebnis von abgestimmten Daten zu erzeugen, die nach außen kommuniziert werden.

Gemäß einer Ausführungsform der Erfindung umfasst das Verfahren weiter die Schritte: Erzeugen von Eingabedaten für das Anwendungsmodul in einem Sensor; und Verarbeiten von abgestimmten Daten in einem Aktuator. Das System kann also zusätzlich einen Sensor umfassen, der die Eingabedaten für die Rechnerplattformen erzeugt, die die Rechnerplattformen redundant verarbeiten. Weiter kann das System einen Aktuator umfassen, der die abgestimmten Daten erhält, die vom dem System auf Fehler überprüft und eventuell angepasst wurden.

Ein weiterer Aspekt der Erfindung betrifft Programmmodule (d. h. ein Computerprogramm), die, wenn sie auf dem ersten Prozessor bzw. CPU und dem zweiten Prozessor bzw. CPU ausgeführt werden, die Prozessoren bzw. CPUs dazu anleiten, das Verfahren so wie obenstehend und untenstehend durchzuführen.

Ein weiterer Aspekt der Erfindung betrifft ein computerlesbares Medium, auf dem derartige Programmmodule gespeichert sind. Ein computerlesbares Medium kann dabei eine Diskette, eine Harddisk, ein USB-Speichergerät, ein RAM, ein ROM, ein EPROM sein. Ein computerlesbares Medium kann auch ein Datenkommunikationsnetzwerk, wie beispielsweise das Internet, das den Download eines Programmcodes ermöglicht, sein.

Im Folgenden werden Ausführungsbeispiele der Erfindung mit Bezug auf die beiliegenden Figuren detailliert beschrieben.

### KURZE BESCHREIBUNG DER FIGUREN

**Fig. 1** zeigt eine schematische Ansicht eines Systems gemäß einer Ausführungsform der Erfindung.
**Fig. 2** zeigt eine schematische Ansicht eines Systems gemäß einer Ausführungsform der Erfindung.
**Fig. 3** zeigt ein Flussdiagramm für ein Verfahren gemäß einer Ausführungsform der Erfindung.
**Fig. 4** zeigt eine schematische Ansicht eines Systems gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

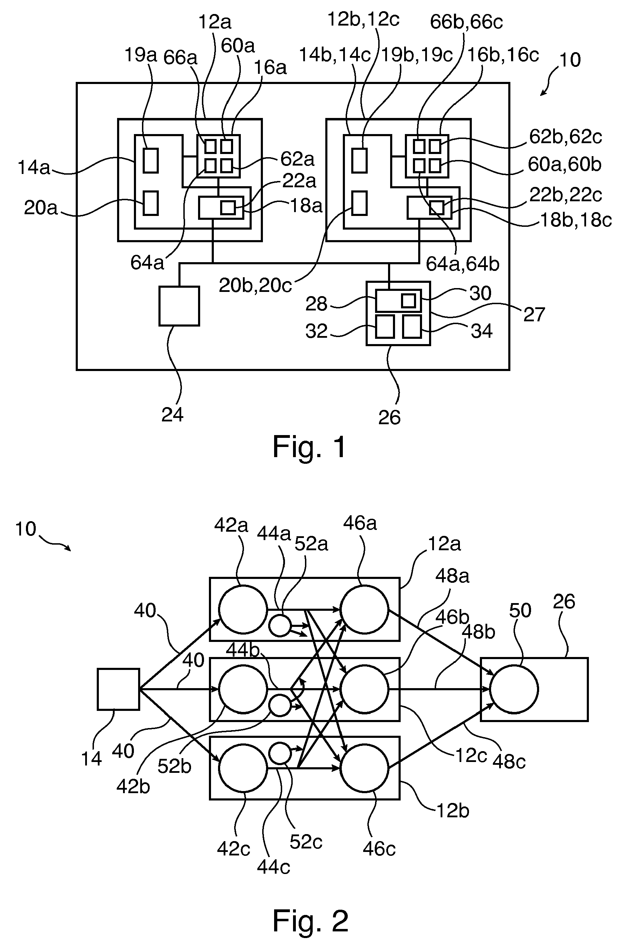

Die Fig. 1 zeigt ein System 10 zur Fehlerreduktion mit zwei Rechnerplattformen 12a, 12b. Es ist zu verstehen, dass eine Rechnerplattform bzw. Plattform 12a, 12b ein eigenständiger Rechner, eine Platine mit den weiter unten beschrieben Komponenten, aber im Extremfall auch ein System auf einem einzigen Chip sein kann.

Die Plattform 12a umfasst eine CPU 14a, einen (Haupt-)Speicher 16a und eine Kommunikationseinheit 18a. Die CPU 14a der Plattform 12a umfasst einen Prozessorkern 19a, auf dem Software bzw. Programmmodule ausgeführt werden können und eine Überwachungseinheit 20a, die dazu ausgeführt ist, den Prozessorkern 19a und Bereiche des Speichers 16a zu überwachen bzw. daraus Daten zu kopieren, während andere Komponenten der CPU 14a, wie zum Beispiel der Prozessorkern 19a, weitere Aufgaben durchführen können. Die Überwachungseinheit 20a kann auch ein von der CPU 14a separates Bauteil auf einem gesonderten Chip sein.

Beispielsweise kann die Überwachungseinheit 20a eine Debug-Einheit oder eine DMA-Einheit (direct memory access unit) umfassen.

Die Kommunikationseinheit 18a, die auch Bestandteil bzw. eine Komponente der CPU 14a sein kann, umfasst beispielsweise ein PCI-Express-Modul 22a, das dazu ausgeführt ist, einen Speicherbereich des Speichers 16a direkt an ein weiteres PCI-Express-Modul (beispielsweise 22b) zu versenden. Die Kommunikationseinheit 18a kann auch weitere Kommunikationsmodule neben dem PCI-Express-Modul 22a aufweisen, wie etwa ein Ethernet-Modul oder ein I2C-Modul. Auch mit derartigen (Hardware-)Modulen kann eine Anbindung von Sensoren als auch die Kommunikation mit anderen Plattformen realisiert sein.

Die Plattform 12b ist analog der Plattform 12a aufgebaut und kann die gleichen Komponenten umfassen, d. h. eine CPU 14b, einen Speicher 16b, eine Kommunikationseinheit 18b, einen Prozessorkern 19b, eine Überwachungseinheit 20a und ein PCI-Express-Modul 22b.

Die beiden Plattformen 12a und 12b können identisch aufgebaut sein, können aber auch verschiedene Hardware aufweisen. Beispielsweise können die beiden CPUs 14a und 14b P4080-Prozessoren oder ARM-Prozessoren sein. Es ist aber auch möglich, dass die beiden Plattformen 12a, 12b und insbesondere die beiden CPUs 14a, 14b unterschiedlich aufgebaut sind. Beispielsweise kann eine der beiden CPUs 14a, 14b ein ARM-Prozessor sein.

Das System umfasst weiter einen Sensor 24, der die Plattformen 12a, 12b über die Kommunikationseinheiten 18a, 18b mit Daten, beispielsweise Messdaten, versorgt.

Eine Steuerung 26 eines Aktuator 27 des Systems 10 wird von den beiden Plattformen 12a, 12b mit Daten versorgt. Der Aktuator umfasst eine Kommunikationseinheit 28, die beispielsweise ein PCI-Express-Modul 30 umfassen kann, sowie eine eigene CPU 32 und einen Speicher 34. Die Daten von den Plattformen 12a, 12b können beispielsweise von den PCI-Express-Modulen 18, 18b an das PCI-Express-Modul 30 gesendet werden, das die Daten direkt in einen Bereich des Speichers 34 schreibt. Die 26 Steuerung des Aktuators 27 kann als weitere Rechnerplattform aufgefasst werden.

Das System 10 kann beispielsweise Bestandteil eines Luftfahrzeugs, eines Bodenfahrzeugs oder einer industriellen Anlage sein.

Die Fig. 2 zeigt ein System 10, das mehrere Plattform 12a, 12b ,12c umfasst, die wie die Plattform aus der Fig. 1 aufgebaut sein können. Beispielsweise könnte das System 10 aus der Fig. 1 durch Hinzufügen einer Plattform 12c zu dem System 10 aus der Fig. 2 erweitert werden. Diese Plattform 12c kann genauso eine CPU 14c, einen Speicher 16c, eine Kommunikationseinheit 18c, ein Prozessorkern 19c, eine Überwachungseinheit 20c und ein PCI-Express-Modul 22c umfassen (siehe Fig 1).

Die Fig. 2 zeigt insbesondere Aspekte, die Programmmodule betreffen, die in den Plattformen 12a, 12b, 12c und der Steuerung 26 in deren CPUs ablaufen.

Der Sensor 24 erzeugt dabei Eingabedaten 40, die jeder der Plattformen 12a, 12b, 12c zugesendet werden. Die in jeder Plattform 12a, 12b, 12c empfangenen Eingabedaten 40 können sowohl identisch sein als auch voneinander abweichen (wenn sie etwa zu unterschiedlichen Zeiten gelesen werden).

In jeder der Plattformen 12a, 12b, 12c ist ein Anwendungsmodul 42a, 42b, 42c installiert, das aus den Eingabedaten 40, (ungeprüfte) vordefinierte Daten 44a, 44b, 44c erzeugt. Beispielsweise verändert das Anwendungsmodul Hardware-Informationen bzw. Hardware-Parameter, Register und/oder Speicherbereiche im Hauptspeicher 16a.

Die Anwendungsmodule 42a, 42b, 42c können zwar verschiedenen Maschinencode aufweisen, da sie eventuell auf unterschiedlich aufgebauten CPUs 14a, 14b ablaufen, sind jedoch aus demselben Quellcode generiert. Wenn die Anwendungsmodule 42a, 42b, 42c korrekt kompiliert wurden und die CPUs 14a, 14b, 14c fehlerfrei arbeiten, sollten die vordefinierten Daten 44a, 44b, 44c identisch sein. Dies ist aber beispielsweise bei Konstruktionsfehlern der CPUs 14a, 14b, 14c nicht der Fall.

Daher werden die vordefinierten Daten 44a, 44b, 44c einem Abstimm(Voter)-Modul 46a, 46b, 46c der jeweiligen Plattform 12a, 12b, 12c zugeführt, der eine Entscheidung trifft, welche vordefinierten Daten 44a, 44b, 44c die korrekten sind bzw. aus den vordefinierten Daten (nach Ansicht des Abstimmmoduls 46a, 46b, 46c) korrigierte Daten 48a, 48b, 48c erzeugt.

Beispielsweise könnte ein Abstimmmodul 46a, 46b, 46c die vordefinierten Daten 44a, 44b, 44c miteinander vergleichen und die Datenfelder der vordefinierten Daten als korrekt identifizieren, die in höchstens einem der drei Fälle voneinander abweichen.

Die abgestimmten Daten 48a, 48b, 48c werden dann von den Plattformen 12a, 12b, 12c an die nachgeschaltete Steuerung 26 gesendet, in der ein weiteres Abstimmmodul 50 installiert sein kann, das aus den (eventuell voneinander abweichenden) Daten 48a, 48b, 48c die Steuerdaten für den Aktuator erzeugt.

Das Versenden der vordefinierten Daten 44a, 44b, 44c zwischen den Plattformen 12a, 12b 12, 12c untereinander erfolgt nun automatisiert mittels Kopiermodulen 52a, 52b, 52c, die in den Plattformen 12a, 12b und 12c installiert sind.

Die Kopiermodule 52a, 52b, 52c kopieren die vordefinierten Daten 44a, 44b, 44c nicht durch normale Speicherzugriffe der CPUs, sondern weisen die Überwachungseinheiten 20a, 20b an, diese Daten für die entsprechende Kommunikationseinheit 18a, 18b, 18c zu kopieren, die sie dann an die anderen Plattformen versenden. Die Kopiermodule 52a, 52b, 52c können auch dazu ausgeführt sein, das Versenden auch ohne Mithilfe der CPUs 14a, 14b, 14c zu organisieren, indem sie beispielsweise die PCI-Express-Einheiten 22a, 22b, 22c entsprechend konfigurieren. Es ist zu verstehen, dass die Kopiermodule 52a, 52b, 52c nicht notwendigerweise Programme sein müssen, die auf dem prozessorkern 19a laufen, sondern dass sie Parametrisierungen der Überwachungseinheiten und/oder Kommunikationseinheiten umfassen können.

Auch kann das Versenden der Daten 48a, 48b, 48c von den Plattformen 12a, 12b und 12c zum Aktuator 26 über entsprechende Kopiermodule erfolgen. Alternativ können die vordefinierten Daten 44a, 44b, 44c von den Plattformen 12a, 12b, 12c mit den Kopiermodulen 52a, 52b, 52c direkt dem Abstimmmodul 50 zugesendet werden.

Auf diese Weise kann auf einfache Art und Weise ein redundantes System 10 installiert werden, das schnell arbeitet und das leicht umkonfiguriert werden kann. Die Kopiermodule 52a, 52b, 52c müssen beim Austausch der Anwendungsmodule 42a, 42b, 42c oder der Abstimmmodule 46a, 46b, 46c nicht ausgetauscht werden. Auch kann während des Kopierens und Versenden der vordefinierten Daten 44a, 44b, 44c die entsprechende CPU 14a, 14b, 14c andere Aufgaben erledigen, wie etwa Anwendungsmodule 42a, 42b, 42c parallel ablaufender Prozesse abzuarbeiten.

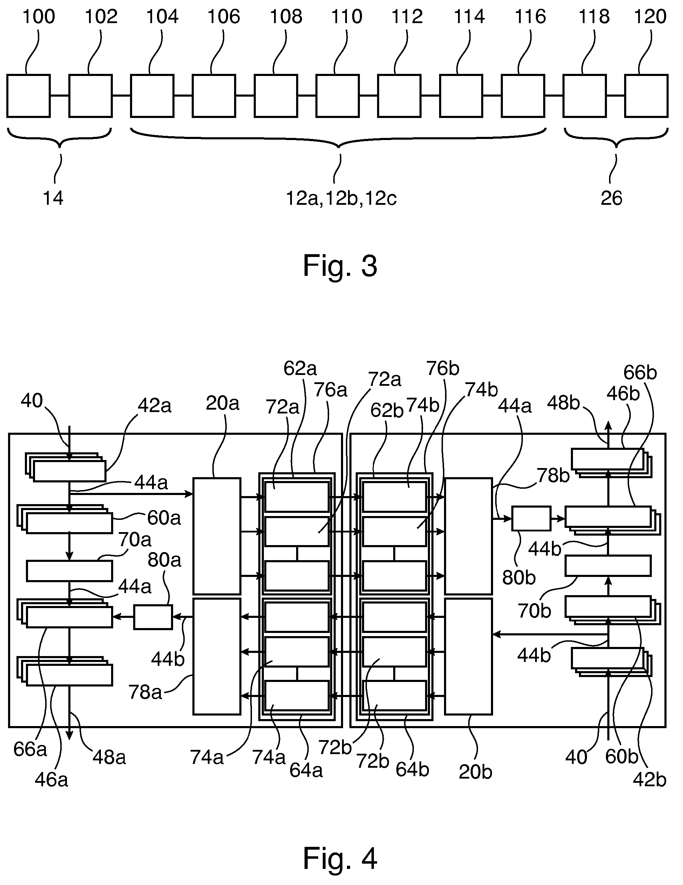

Die Fig. 3 zeigt ein Flussdiagramm, das eine mögliche Arbeitsweise des Systems 10 erläutert.

In einem Schritt 100 werden Eingabedaten 40 durch den Sensor erfasst.

In einem Schritt 102 werden die Eingabedaten 40 an die Plattformen 12a, 12b, 21c versendet. Es ist zu verstehen, dass die Eingabedaten 40 auch aus einer anderer Quelle, wie etwa einem vorgeschalteten Rechner stammen können.

Die folgenden Schritte 104 bis 116 können nun von allen Plattformen 12a, 12b, 12c durchgeführt werden. Sie werden im Folgenden exemplarisch in Bezug auf die Plattform 12a beschrieben.

Im Schritt 104 werden die Eingabedaten 40 verarbeitet und durch das Anwendungsmodul 42a in ungeprüfte vordefinierte Daten 44a umgewandelt.

Im Schritt 106 werden vordefinierte Daten 44a durch das Anwendungsmodul 42a in einen Ausgabe-Speicherbereich 60a im Hauptspeicher 16a (siehe Fig. 1) geschrieben. Auch können durch das Anwendungsmodul 42a Register des Prozessorkerns 19a und Hardware-Parameter verändert werden, die weitere vordefinierte Daten 44a erzeugen.

Im Hauptspeicher 16a befinden sich weitere Speicherbereiche 62a, 64a, 66a, die noch im Folgenden erläutert werden. Die anderen Plattformen 12a, 12b weisen in ihren Hauptspeichern 16b, 16c analoge Speicherbereiche 60b, 60c, 62a, 62c, 64b, 64c, 66b, 66c auf.

Im Schritt 108 werden der Ausgabe- Speicherbereich 60a und die überwachten Register/Hardware-Informationen von der Überwachungseinheit 20a automatisch in einen Sende-Speicherbereich 60b kopiert. Beispielweise erkennt eine Debug-Einheit einen Schreibvorgang in den Speicherbereich 60a und kopiert selbstständig die Daten. Auch ist es möglich, dass ein DMA-Chip angestoßen wird, den Speicherbereich 60a zu kopieren. Dies kann beispielsweise von dem Anwendungsmodul 42a oder einer Debug-Einheit erfolgen.

Im Schritt 108 können auch Daten aus der Rechnerplattform 12a, wie beispielsweise bestimmte Informationen über die Hardware selbst, wie etwa Hardware-, Prozessorkern-Ladeparameter, Temperatur in einen Sende-Speicherbereich 62a geschrieben werden, so dass diese Daten an die anderen Plattformen 12b, 12c versendet werden. Dies kann beispielsweise durch die Überwachungseinheit 20a geschehen. Auch ist es möglich, dass die Überwachungseinheit 30a diese Daten zu den vordefinierten Daten 44a im Ausgabe-Speicherbereich 60a oder im Sende-Speicherbereich 62a hinzufügt, so dass diese zusammen mit den Ausgabedaten des Anwendungsmoduls 42azu den weiteren Plattformen versendet werden.

Im Schritt 110 werden die vordefinierten Daten im Sende-Speicherbereich 60b an die weiteren Plattformen 12b, 12c versendet. Beispielsweise kann der Sende-Speicherbereich 60b ein Speicherbereich sein, der dem PCI-Express-Modul 22a zugewiesen ist, die dann die enthaltenen Daten an die PCI-Express-Module 22b, 22c der weiteren Plattformen 12b, 12c versendet.

Auch die weiteren Plattformen führen diese Schritte durch und versenden entsprechende vordefinierte Daten 44b, 44c an die Plattform 12a.

Im Schritt 112 werden beispielsweise die vordefinierten Daten 44b in dem PCI-Express-Modul 22a empfangen, das die Daten 44b in einen Speicherbereich 64a schreibt.

Wenn alle vordefinierten Daten 44a, 44b, 44c bei der Plattform 12a eingetroffen sind, wird im Schritt 114 das Abstimmmodul 46a ausgeführt, das die vordefinierten Daten 44a, 44b, 44c zu den Daten 48a weiterverarbeitet. Alternativ kann es auch möglich sein, dass das Abstimmmodul 46a ausgeführt wird, wenn die Abarbeitung des Anwendungsmoduls 42a beendet wurde oder wenn ein Scheduler dies bestimmt.

Im Schritt 116 werden die abgestimmten Daten 48a mit der Kommunikationseinheit 18a an die Steuerung 26 versendet.

Alternativ zu den Schritten 110 bis 116 können die vordefinierten Daten 44a, 44b, 44c direkt an das PCI-Express-Modul 30 der Steuerung 26 versendet werden, ohne die Abstimmmodule 46a, 46b, 46c zu durchlaufen.

Im Schritt 118 werden die abgestimmten Daten 48a, 48b, 48c (bzw. 44a, 44b, 44c) in der Kommunikationseinheit 28 der Steuerung 26 empfangen und in der Abstimmeinheit 50 abschließend bearbeitet.

Im Schritt 120 wird der Aktuator 27 gemäß den von der Abstimmeinheit 50 erzeugten Daten angesteuert.

Die Fig. 4 zeigt ein weiteres Diagramm, das das System 10 und das Verfahren aus der Fig. 3 anhand einer Ausführungsform weiter erläutert.

Die Fig. 4 zeigt das Wechselspiel zwischen den Rechnerplattformen 12a und 12b, das symmetrisch ist. Daher wird im Folgenden das Verfahren aus Sicht der Rechnerplattform 12a beschrieben. Die Rechnerplattform 12b kann sich spiegelbildlich verhalten.

Die Eingabedaten 40 werden in einer Partition bzw. einem Prozess in der Rechnerplattform 12a verarbeitet, in dem das Anwendungsmodul 42a vom Prozessorkern 19a ausgeführt wird. Die CPU 14a kann mehrere Prozessorkerne 19a aufweisen, die eine Mehrzahl von Prozessen mit verschiedenen Anwendungsmodulen 42a gleichzeitig ausführen.

Das Anwendungsmodul 42a schreibt dann erzeugten vordefinierten Daten 44a in den Speicherbereich 60a, der dem entsprechenden Prozess zugewiesen ist. Weiter oder alternativ kann das Anwendungsmodul 42a Register und Hardware-Parameter verändern. Anderen Prozessen bzw. Anwendungsmodule 42a können anderen Speicherbereiche 60a zugewiesen sein.

Durch das Schreiben der Ausgangsdaten durch den Prozessorkern 19a erkennt die Debug-Einheit 20a, dass die vordefinierten Daten 44a erzeugt oder geändert wurden. Beispielsweise kann eine Trace-Funktion der Debug- Einheit 20a einen Speicherzugriff auf den Speicherbereich 60a durch den Prozessor 19a erkennen.

Durch eine Kopierfunktion 70a werden die vordefinierten Daten 44a in einen Speicherbereich 66a für das Abstimmmodul 46a kopiert. Auch das Abstimmmodul 46a kann in einer Partition bzw. einem Prozess im Prozessorkern 19a ausgeführt werden. Es ist möglich, dass auch weitere parallele Prozesse von der CPU 14a ausgeführt werden, in denen weitere Abstimmmodule 46a laufen, die anderen Anwendungsmodulen 42a zugeordnet sein können. Anderen Abstimmmodulen 46a können andere Speicherbereiche 66a zugewiesen sein. Die Kopierfunktion 70a kann dazu ermitteln, in welchen Speicherbereich 66a die vordefinierte Daten 44a geschrieben werden. In der Rechnerplattform 12b ist eine entsprechende Kopierfunktion 70b implementiert.

Nachdem die Debug-Einheit 20a erkannt hat, dass vordefinierten Daten 44a geschrieben wurden und/oder Hardware-Parameter verändert wurden, kopiert die Debug-Einheit 20a, den Ausgabe-Speicherbereich 60a und/oder die Hardware-Parameter in den Sende-Speicherbereich 62a, der dem PCI-Express-Modul 22a zugeordnet ist. Der Speicherbereich 62a kann in mehrere Einzelspeicherbereiche 72a aufgeteilt sein, die den jeweiligen Prozessen der Anwendungsmodule 42a und der Abstimmmodule 46a zugeordnet sind.

Wird ein Sende-Speicherbereich 72a geschrieben, kopieren bzw. senden die PCI-Expressmodule 22a und 22b dessen Inhalt in einen korrespondierenden Empfangs-Speicherbereich 74a. Analog dem Sende-Speicherbereich 62a ist der Empfangsspeicherbereich 62b in entsprechende Einzelspeicherbereiche 74b unterteilt, die den Prozessen bzw. den Anwendungsmodulen 44b und den Abstimmmodulen 46b der Rechnerplattform 12b zugeordnet sind.

Insgesamt ist in der Rechnerplattform 12a ein PCI-Speicherbereich 76a, der die Speicherbereiche 62a und 64a umfasst, und in der Rechnerplattform 12b ein PCI-Speicherbereich 76b, der die Speicherbereiche 62b und 64b umfasst, vorgesehen.

Von dem Speicherbereich 74b werden die vordefinierten Daten 44a entweder direkt in den Speicherbereich 66b des Abstimmmodules 46b oder indirekt über einen Zielspeicherbereich 78b des PCI-Express-Moduls 22b und eine Kopierfunktion 80b in den Speicherbereich 66b des Abstimmmoduls 46b kopiert.

In analoger Weise werden die vordefinierten Daten 44b von den PCI-Express-Modulen 22a, 22b, von einem Sende-Speicherbereich 72b in einen Empfangs-Speicherbereich 74a von der Rechnerplattform 12b zu der Rechnerplattform 12a kopiert. Anschließend werden sie analog der Rechnerplattform 12b entweder direkt oder indirekt über einen Zielspeicherbereich 78a des PCI-Express-Moduls 22a und eine Kopierfunktion 80a in den in Speicherbereich 66a des Abstimmmoduls 46a kopiert.

Die im Speicherbereich 66a, 66b vorhandenen vordefinierten Daten 44a und 44b werden dann von dem entsprechenden Abstimmmodul 46, 46b zu den abgestimmten Daten 48a, 48b weiterverarbeitet.

Ergänzend ist daraufhinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Vermindern von Fehlern bei der Ausführung eines Anwendungsmoduls (42a, 42b), das Verfahren umfassend die Schritte:
Ausführen eines Anwendungsmoduls (42a) in einem ersten Prozessorkern (19a) einer ersten Rechnerplattform (12a), wobei das Anwendungsmodul (42a) erste vordefinierte Daten (44a) ändert;
Ausführen des Anwendungsmoduls (42b) in einem zweiten Prozessorkern (19b) einer zweiten Rechnerplattform (12b), wobei das Anwendungsmodul (42b) zweite vordefinierte Daten (44b) ändert;
Überwachen des Anwendungsmoduls (42a) durch eine vom ersten Prozessorkern (19a) unabhängige Überwachungseinheit (20a);
Kopieren der ersten vordefinierten Daten (44a) in die zweite Rechneiplattform (12b) durch die Überwachungseinheit (20a);
Vergleichen der ersten vordefinierten Daten (44a) und der zweiten vordefinierten Daten (44b) in einem Abstimmmodul in der zweiten Rechnerplattform (12b), welches daraus abgestimmte Daten (48b) bereitstellt, so dass Fehler in den ersten vordefinierten Daten (44a) oder zweiten vordefinierten Daten (44b), die durch Ausführen des Anwendungsmoduls (42a, 42b) in dem ersten Prozessorkern (19a) oder dem zweiten Prozessorkern (19b) erzeugt wurden, vermindert werden;
Senden der abgestimmten Daten (48b) an eine nachgeschaltete Steuerung (26), **dadurch gekennzeichnet, dass** die Überwachungseinheit (20a) überwacht, ob das Anwendungsmodul (42a) die ersten vordefinierten Daten (44a) verändert hat, wobei die erste Rechnerplattform (12a) eine zentrale Prozessoreinheit (14a) umfasst, die den Prozessorkern (19a) und die Überwachungseinheit (20a) auf einem Chip umfasst und wobei die Überwachungseinheit (20a) eine Debug-Einheit der zentralen Prozessoreinheit (14a) ist.

2. Verfahren nach Anspruch 1,
wobei das Anwendungsmodul (42a) bei dessen Ausführung erste vordefinierte Daten (44a) in einen Ausgabe-Speicherbereich (60a) der ersten Rechnerplattform (12a) speichert;
wobei die Überwachungseinheit den Ausgabe-Speicherbereich (60a) überwacht.

3. Verfahren nach einem der vorhergehenden Ansprüche,
wobei die Überwachungseinheit Hardware-Informationen, die vom ersten Anwendungsmodul (42a) beeinflusst werden, als erste vordefinierte Daten (44a) überwacht.

4. Verfahren nach einem der vorhergehenden Ansprüche, weiter umfassend den Schritt:
Auslösen des Kopierens durch die Überwachungseinheit (20a) durch ein Prozessorereignis und/oder
wobei das Prozessorereignis der Zugriff des ersten Prozessorkerns (19a) auf einen Ausgabe-Speicherbereich (60a) ist.

5. Verfahren nach einem der vorhergehenden Ansprüche, weiter umfassend die Schritte:
Kopieren der ersten vordefinierten Daten (44a) in einen Sende-Speicherbereich (62a) der ersten Rechnerplattform (12a) durch die Überwachungseinheit (20a);
Versenden der ersten vordefinierten Daten (44a) im Sende-Speicherbereich (62a) mit einer ersten Kommunikationseinheit (18a) der ersten Rechneplattform (12a) zu einer zweiten Kommunikationseinheit (18b) der zweiten Rechnerplattform (12b);
wobei die erste Kommunikationseinheit (18a) unabhängig vom ersten Prozessorkern (19a) den Sende-Speicherbereich (62a) ausliest und die darin gespeicherten ersten vordefinierten Daten (44a) an die zweite Kommunikationseinheit (18b) versendet.

6. Verfahren nach einem der vorhergehenden Ansprüche, weiter umfassend die Schritte:
Verarbeiten der ersten vordefinierten Daten (44a) und der zweiten vordefinierten Daten (44b) in einem Abstimmmodul (46a) in der zweiten Rechnerplattform (12b) zu zweiten abgestimmten Daten (48b);
Kopieren der von dem Anwendungsmodul (42b) in der zweiten Rechnerplattform (12b) erzeugten zweiten vordefinierten Daten (44b) in die erste Rechnerplattform (12b);
Verarbeiten der ersten vordefinierten Daten (44a) und der zweiten vordefinierten Daten (44b) in einem Abstimmmodul (46a) in der ersten Rechnerplattform (12b) zu ersten abgestimmten Daten (44a).

7. Verfahren nach einem der vorhergehenden Ansprüche,
wobei die erste Rechnerplattform (12a) erste abgestimmte Daten (48a) und die zweite Rechnerplattform (12b) zweite abgestimmte Daten (48b) erzeugt;
das Verfahren weiter umfassend die Schritte:
Versenden der ersten abgestimmten Daten (48a) und der zweiten abgestimmten Daten (48) zu einer nachgeschalteten Steuerung (26);
Verarbeiten der ersten abgestimmten Daten (48a) und zweiten abgestimmten Daten (48) zu finalen Daten durch ein nachgeschaltetes Abstimmmodul (50) in der nachgeschalteten Steuerung (26).

8. Verfahren nach einem der vorhergehenden Ansprüche, weiter umfassend die Schritte:
Erzeugen von Eingabedaten (40) für das Anwendungsmodul (42a) in einem Sensor (24);
Verarbeiten von abgestimmten Daten (48a) in einem Aktuator (27).

9. Programmmodule, die, wenn sie auf einem ersten und zweiten Prozessor ausgeführt werden, die Prozessoren dazu anleiten, das Verfahren nach einem der Ansprüche 1 bis 8 durchzuführen.

10. Computerlesbares Medium, auf dem Programmmodule nach Anspruch 9 gespeichert sind.

11. System (10) zum Vermindern von Fehlern bei der Ausführung eines Anwendungsmoduls, das System umfassend:
wenigstens eine erste Rechnerplattform (12a) und eine zweite Rechnerplattform (12b);
wobei die erste Rechnerplattform (12a) einen ersten Prozessorkern (19a), eine erste Überwachungseinheit (20a) und eine erste Kommunikationseinheit (18a) umfasst;
wobei die zweite Rechnerplattform (12b) einen zweiten Prozessorkern (19a), eine zweite Überwachungseinheit (20a) und eine zweite Kommunikationseinheit (18a) umfasst;
wobei das System (10) dazu ausgeführt ist, das Verfahren nach einem der Ansprüche 1 bis 8 durchzuführen.

## Claims

1. Method for reducing errors in the running of an application module (42a, 42b), the method comprising the steps of:
running an application module (42a) in a first processor core (19a) of a first computer platform (12a), wherein the application module (42a) changes first predefined data (44a);
running the application module (42b) in a second processor core (19b) of a second computer platform (12b), wherein the application module (42b) changes second predefined data (44b);
monitoring the application module (42a) by a monitoring unit (20a) independent of the first processor core (19a);
copying the first predefined data (44a) into the second computer platform (12b) by the monitoring unit (20a);
comparing the first predefined data (44a) and the second predefined data (44b) in a tuning module in the second computer platform (12b), which produces tuned data (48b) therefrom, so that errors in the first predefined data (44a) or second predefined data (44b), which were produced by running the application module (42a, 42b) in the first processor core (19a) or second processor core (19b), are reduced;
transmitting the tuned data (48b) to a downstream controller (26), **characterised in that** the monitoring unit (20a) monitors whether the application module (42a) has changed the first predefined data (44a), wherein the first computer platform (12a) includes a central processor unit (14a) which includes the processor core (19a) and the monitoring unit (20a) on a chip, and wherein the monitoring unit (20a) is a debug unit of the central processor unit (14a).

2. Method as claimed in claim 1,
wherein the application module (42a), when being run, stores first predefined data (44a) in an output memory region (60a) of the first computer platform (12a);
wherein the monitoring unit monitors the output memory region (60a).

3. Method as claimed in any one of the preceding claims,
wherein the monitoring unit monitors hardware information, which is influenced by the first application module (42a), as first predefined data (44a).

4. Method as claimed in any one of the preceding claims, further comprising the step of:
triggering the copying by the monitoring unit (20a) by a processor result and/or
wherein the processor result is the access of the first processor core (19a) to an output memory region (60a).

5. Method as claimed in any one of the preceding claims, further comprising the steps of:
copying the first predefined data (44a) into a transmission memory region (62a) of the first computer platform (12a) by the monitoring unit (20a);
transmitting the first predefined data (44a) in the transmission memory region (62a) using a first communications unit (18a) of the first computer platform (12a) to a second communications unit (18b) of the second computer platform (12b);
wherein the first communications unit (18a) reads the transmission memory region (62a), independently of the first processor core (19a), and transmits the first predefined data (44a) stored therein to the second communications unit (18b).

6. Method as claimed in any one of the preceding claims, further comprising the steps of:
processing the first predefined data (44a) and the second predefined data (44b) in a tuning module (46a) in the second computer platform (12b) to form second tuned data (48b);
copying the second predefined data (44b), produced by the application module (42b) in the second computer platform (12b), into the first computer platform (12b);
processing the first predefined data (44a) and the second predefined data (44b) in a tuning module (46a) in the first computer platform (12a) to form first tuned data (48a).

7. Method as claimed in any one of the preceding claims,
wherein the first computer platform (12a) produces first tuned data (48a) and the second computer platform (12b) produces second tuned data (48b);
the method further comprising the steps of:
transmitting the first tuned data (48a) and the second tuned data (48) to a downstream controller (26);
processing the first tuned data (48a) and the second tuned data (48b) to form final data by a downstream tuning module (50) in the downstream controller (26).

8. Method as claimed in any one of the preceding claims, further comprising the steps of:
producing input data (40) for the application module (42a) in a sensor (24);
processing tuned data (48a) in an actuator (27).

9. Program modules which, when run on a first and second processor, cause the processors to carry out the method as claimed in any one of claims 1 to 8.

10. Computer-readable medium, on which program modules as claimed in claim 9 are stored.

11. System (10) for reducing errors when running an application module, the system comprising:
at least one first computer platform (12a) and one second computer platform (12b);
wherein the first computer platform (12a) includes a first processor core (19a), a first monitoring unit (20a) and a first communications unit (18a);
wherein the second computer platform (12b) includes a second processor core (19a), a second monitoring unit (20b) and a second communications unit (18a);
wherein the system (10) is configured to carry out the method as claimed in any one of claims 1 to 8.

## Revendications

1. Procédé destiné à réduire des erreurs lors de l'exécution d'un module d'application (42a, 42b), le procédé comprenant les étapes :
exécution d'un module d'application (42a) dans un premier coeur de processeur (19a) d'une première plateforme d'ordinateur (12a), dans laquelle le module d'application (42a) modifie des premières données prédéfinies (44a);
exécution du module d'application (42b) dans un deuxième coeur de processeur (19b) d'une deuxième plateforme d'ordinateur (12b), dans laquelle le module d'application (42b) modifie des deuxièmes données prédéfinies (44b);
surveillance du module d'application (42a) par une unité de surveillance (20a) indépendante du premier coeur de processeur (19a),
copie des premières données prédéfinies (44a) dans la deuxième plateforme d'ordinateur (12b) par l'unité de surveillance (20a);
comparaison des premières données prédéfinies (44a) et des deuxièmes données prédéfinies (44b) dans un module d'accord dans la deuxième plateforme d'ordinateur (12b), lequel module d'accord, à partir de cette comparaison, fournit des données accordées (48b), de sorte que des erreurs dans les premières données prédéfinies (44a) ou dans les deuxièmes données prédéfinies (44b), qui ont été générées en raison de l'exécution du module d'application (42a, 42b) dans le premier coeur de processeur (19a) ou dans le deuxième coeur de processeur (19b), sont réduites;
émission des données accordées (48b) à une commande (26) installée en aval,
**caractérisé en ce que** l'unité de surveillance (20a) surveille si le module d'application (42a) a modifié les premières données prédéfinies (44a), dans lequel la première plateforme d'ordinateur (12a) comprend une unité centrale à processeur (14a) qui comprend le coeur d'ordinateur (19a) et l'unité de surveillance (20a) sur une puce et
dans lequel l'unité de surveillance (20a) est une unité de débogage de l'unité centrale à processeur (14a).

2. Procédé selon la revendication 1,
dans lequel le module d'application (42a), lors de son exécution, mémorise des premières données prédéfinies (44a) dans une zone mémoire de sortie (60a) de la première plateforme d'ordinateur (12a);
dans lequel l'unité de surveillance surveille la zone mémoire de sortie (60a).

3. Procédé selon l'une quelconque des revendications précédentes,
dans lequel l'unité de surveillance surveille, en tant que premières données prédéfinies (44a), des informations sur le matériel, lesquelles sont influencées par le premier module d'application (42a).

4. Procédé selon l'une quelconque des revendications précédentes, comprenant en outre l'étape:
déclenchement de l'opération de copie par l'unité de surveillance (20a) en raison d'un événement de processeur et/ou
dans lequel l'événement de processeur est l'accès du premier coeur de processeur (19a) à une zone mémoire de sortie (60a).

5. Procédé selon l'une quelconque des revendications précédentes, comprenant en outre les étapes:
copie des premières données prédéfinies (44a) dans une zone mémoire d'émission (62a) de la première plateforme d'ordinateur (12a) par l'unité de surveillance (20a);
émission des premières données prédéfinies (44a) dans la zone mémoire d'émission (62a) à l'aide d'une première unité de communication (18a) de la première plateforme d'ordinateur (12a) vers une deuxième unité de communication (18b) de la deuxième plateforme d'ordinateur (12b);
dans lequel la première unité de communication (18a) lit la zone mémoire d'émission (62a) indépendamment du premier coeur de processeur (19a) et émet à la deuxième unité de communication (18b) les premières données prédéfinies (44a) qui y sont mémorisées.

6. Procédé selon l'une quelconque des revendications précédentes, comprenant en outre les étapes:
traitement des premières données prédéfinies (44a) et des deuxièmes données prédéfinies (44b) dans un module d'accord (46a) dans la deuxième plateforme d'ordinateur (12b) en deuxièmes données accordées (48b);
copie dans la première plateforme d'ordinateur (12b) des deuxièmes données prédéfinies (44b), générées dans la deuxième plateforme d'ordinateur (12b);
traitement des premières données prédéfinies (44a) et des deuxièmes données prédéfinies (44b) dans un module d'accord (46a) dans la première plateforme d'ordinateur (12a) en premières données accordées (48a).

7. Procédé selon l'une quelconque des revendications précédentes,
dans lequel la première plateforme d'ordinateur (12a) génère des premières données accordées (48a) et dans lequel la deuxième plateforme d'ordinateur {12b) génère des deuxièmes données accordées (48b);
le procédé comprenant en outre les étapes:
émission des premières données accordées (48a) et des deuxièmes données accordées (48b) vers une commande (26) installée en aval;
traitement des premières données accordées (48a) et des deuxièmes données accordées (48b) en données finales par un module d'accord (50) installé en aval dans la commande (26) installée en aval.

8. Procédé selon l'une quelconque des revendications précédentes, comprenant en outre les étapes:
génération dans un capteur (24) de données d'entrée (40) pour le module d'application (42a);
traitement dans un actionneur (27) de données accordées (48a).

9. Modules de programme, lesquels, lorsqu'ils sont exécutés sur un premier processeur et un deuxième processeur, amènent les processeurs à exécuter le procédé selon l'une quelconque des revendications 1 à 8.

10. Support lisible par ordinateur, sur lequel les modules de programme selon la revendication 9 sont mémorisés.

11. Système (10) destiné à réduire des erreurs lors de l'exécution d'un module d'application, lequel système comprend:
au moins une première plateforme d'ordinateur (12a) et une deuxième plateforme d'ordinateur (12b);
dans lequel la première plateforme d'ordinateur (12a) comprend un premier coeur de processeur (19a), une première unité de surveillance (20a) et une première unité de communication (18a);
dans lequel la deuxième plateforme d'ordinateur (12b) comprend un deuxième coeur de processeur (19b), une deuxième unité de surveillance (20b) et une deuxième unité de communication (18b);
dans lequel le système (10) est conçu pour exécuter le procédé selon l'une quelconque des revendications 1 à 8.
